# EUROPEAN PATENT APPLICATION

(11) **EP 4 723 704 A1**
(43) Date of publication of application: **08.04.2026**
(21) Application number: 23941101.0
(22) Date of filing: 16.06.2023
(51) Int. Cl.: H04W 12/033

(54) **METHOD AND APPARATUS FOR SECURE COMMUNICATION**

(71) Applicant: Huawei Technologies Co., Ltd., Shenzhen, Guangdong 518129 (CN)
(72) Inventor: SUN, Li, Shenzhen, Guangdong 518129 (CN); LIU, Peng, Shenzhen, Guangdong 518129 (CN); WANG, Wenhui, Shenzhen, Guangdong 518129 (CN)
(74) Representative: Goddar, Heinz J.
(86) International application number: PCT/CN2023/100806
(87) International publication number: WO 2024/254868

(57) **Abstract**

This application provides a secure communication method and an apparatus, to implement secure communication by using a security module, and relates to the field of wireless communication technologies. In the method, a communication apparatus inputs i first data packets into a security module, to obtain i second data packets, where i is an integer greater than or equal to 1, and the security module is configured to perform security processing on the i first data packets. The communication apparatus obtains a signal after modulating the i second data packets, and sends the signal. Based on this solution, the communication apparatus may modulate the i second data packets output by the security module, and implement secure communication by using the security module.

## Description

### TECHNICAL FIELD

This application relates to the field of wireless communication technologies, and in particular, to a secure communication method and an apparatus.

### BACKGROUND

Secure transmission is the fundamental assurance for communication. Most secure transmission solutions are key-based, and include symmetric encryption and asymmetric encryption. In symmetric encryption, two parties share a key. In asymmetric encryption, one communication party transmits a public key to the other party. A transmitter uses the public key for encryption, and a receiver uses a private key for decryption. Regardless of the encryption scheme, the two communication parties need to maintain and manage the keys. Because key maintenance and management require support of complex protocols, vulnerabilities in these protocols are often exploited by adversaries. In addition, the complex protocols result in extra communication overheads and delays, making them unable to cope with the highly dynamic nature of future communication networks.

Currently, a physical layer security transmission technology, such as secure coding, secure waveform modulation, or introduction of artificial noise into channels, may implement information transmission and provide basic security. However, the security provided by the physical layer security transmission technology is limited, and non-target receivers still have a high probability of obtaining transmitted information.

### SUMMARY

This application provides a secure communication method and an apparatus, to implement secure communication by using a security module.

According to a first aspect, a secure communication method is provided. The method may be performed by a communication apparatus. The communication apparatus may be a terminal device or a network device, or may be a chip/chip system used in the terminal device or the network device. In the method, the communication apparatus inputs i first data packets into a security module, to obtain i second data packets, where i is an integer greater than or equal to 1, and the security module is configured to perform security processing on the i first data packets. The communication apparatus obtains a signal after modulating the i second data packets, and sends the signal.

Based on this solution, the communication apparatus may modulate the i second data packets output by the security module, implement secure communication by using the security module, and spread random entropy to each data packet by using the security module, so that each bit in the data packet achieves provable security strength.

In a possible implementation, the communication apparatus adds a cyclic redundancy check (cyclic redundancy check, CRC) to each of the i second data packets, and performs channel encoding.

Based on the foregoing solution, for a legitimate receiver, CRC check is performed after channel decoding is completed on each transmission codeword. If the check succeeds, it is considered that decoding succeeds, and the communication apparatus may input the i second data packets obtained by decoding into an inverse processing module of the security module, to obtain the i first data packets. At a non-target receiver, after completing channel decoding, the non-target receiver needs to input a codeword packet obtained by decoding to an inverse processing phase of the security module. According to a working principle of the security module, once any packet is decoded incorrectly, a random bit error is spread by the security module, so that errors occur when the non-target receiver recovers all packets. This implements secure communication.

In a possible implementation, the communication apparatus adds a CRC to each of the i first data packets, to obtain i third data packets. The communication apparatus inputs the i third data packets into the security module, to obtain the i second data packets.

Based on the foregoing solution, at the non-target receiver, after completing channel decoding, the non-target receiver needs to input a codeword packet obtained by decoding to an inverse processing phase of the security module. In the foregoing solution, a processing sequence at a transmitter end is: CRC addition → randomness extraction → channel encoding. Therefore, inverse operations are completed at a receiver end: channel decoding → inverse processing of randomness extraction → CRC check. This means that, after completing channel decoding, the non-target receiver cannot determine whether each packet is correctly decoded, but directly inputs a decoding result to the inverse processing phase of the security module. According to the working principle of the security module, once any packet is decoded incorrectly, a random bit error is spread by the security module, so that errors occur when the non-target receiver recovers all packets. This implements secure communication.

In a possible implementation, the communication apparatus obtains, after adding a CRC to each of the i first data packets and performing channel encoding, i fourth data packets. The communication apparatus inputs the i fourth data packets into the security module, to obtain the i second data packets.

Based on the foregoing solution, at the non-target receiver, it can be learned according to the working principle of the security module that once an error occurs in any packet in a bit sequence obtained by demodulation, a random bit error is spread by the security module, so that a quantity of error bits exceeds an error correction capability of an error correction code and error correction cannot be performed. In this way, errors occur when the non-target receiver recovers all message packets. This implements secure communication.

In a possible implementation, the security module is configured to generate i random seeds, where the i^{th} random seed is used together with the i^{th} first data packet to generate the i^{th} second data packet. If i is an integer greater than or equal to 2, the i^{th} random seed is generated based on the (i-1)^{th} random seed and the (i-1)^{th} second data packet; or if i is equal to 1, the i^{th} random seed is generated based on a random vector.

Based on the foregoing solution, the transmitter end and the receiver end can implement secure communication on data packets by using the security module.

According to a second aspect, a secure communication method is provided. The method may be performed by a communication apparatus. The communication apparatus may be a terminal device or a network device, or may be a chip/chip system used in the terminal device or the network device. In the method, the communication apparatus inputs the k^{th} data packet into a security module, to obtain the (k+1)^{th} piece of random information, where k is an integer greater than or equal to 1, and the k^{th} data packet is a data packet that is successfully transmitted. The communication apparatus obtains the (k+1)^{th} signal based on the (k+1)^{th} piece of random information and the (k+1)^{th} data packet, and sends the (k+1)^{th} signal.

Based on this solution, the communication apparatus may obtain the (k+1)^{th} signal based on the (k+1)^{th} piece of random information output by the security module and the (k+1)^{th} data packet, and implement secure communication by using the security module.

In a possible implementation, the communication apparatus separately modulates the (k+1)^{th} piece of random information and the (k+1)^{th} data packet, and processes signals obtained by modulation, to obtain the (k+1)^{th} signal.

Based on the foregoing solution, for a legitimate receiver, because the k^{th} data packet is correctly received, the legitimate receiver can obtain the (k+1)^{th} piece of random information, and can also determine a signal obtained by modulating the (k+1)^{th} piece of random information. Therefore, the legitimate receiver can obtain the signal obtained by modulating the (k+1)^{th} data packet, and can demodulate the signal normally. In addition, due to independence of a non-target link and a legitimate link, a decoding error mode of a non-target receiver is not consistent with that of the legitimate receiver. Therefore, on the premise that the legitimate receiver correctly receives the k^{th} data packet, the non-target receiver does not necessarily receive the k^{th} data packet correctly. In this way, the non-target receiver cannot obtain the correct (k+1)^{th} piece of random information and the signal obtained by modulating the (k+1)^{th} piece of random information, and demodulation and decoding errors may be caused. That is, a decoding error of the k^{th} data packet causes a decoding error of the (k+1)^{th} data packet. This causes error spreading effect. That is, an error in decoding any packet by the non-target receiver causes decoding errors in all subsequent packets, to significantly improve system security.

In a possible implementation, the communication apparatus generates a scrambling parameter based on the (k+1)^{th} piece of random information. The communication apparatus controls a modulation scheme of the (k+1)^{th} data packet based on the scrambling parameter, to obtain the (k+1)^{th} signal.

Based on the foregoing solution, for the legitimate receiver, because the legitimate receiver has correctly received the k^{th} data packet, the legitimate receiver learns of the scrambling parameter used to scramble a modulation process, so that the legitimate receiver can perform normal demodulation. In addition, due to independence of the non-target link and the legitimate link, the decoding error mode of the non-target receiver is not consistent with that of the legitimate receiver. Therefore, on the premise that the legitimate receiver correctly receives the k^{th} data packet, the non-target receiver does not necessarily receive the k^{th} data packet correctly. In this way, the non-target receiver cannot obtain a correct scrambling parameter, and therefore, demodulation and decoding errors are caused.

In a possible implementation, the communication apparatus generates a permutation index based on the (k+1)^{th} piece of random information, and the permutation index corresponds to at least one permutation manner. The communication apparatus permutes, based on the at least one permutation manner corresponding to the permutation index, bits included in the (k+1)^{th} data packet. The communication apparatus modulates a permutated (k+1)^{th} data packet, to obtain the (k+1)^{th} signal.

Based on the foregoing solution, for the legitimate receiver, because the legitimate receiver has correctly received the k^{th} data packet, the legitimate receiver learns of the permutation index. Therefore, after completing demodulation, the legitimate receiver may perform an inverse operation of the permutation manner of the transmitter end on a bit sequence output by a demodulator, and then perform normal channel decoding. In addition, due to independence of the non-target link and the legitimate link, the decoding error mode of the non-target receiver is not consistent with that of the legitimate receiver. Therefore, on the premise that the legitimate receiver correctly receives the k^{th} data packet, the non-target receiver does not necessarily receive the k^{th} data packet correctly. In this way, the non-target receiver cannot obtain a correct permutation index, and therefore cannot perform the inverse operation of the permutation manner of the transmitter end on the bit sequence output by the demodulator. In this way, after being decoded, the (k+1)^{th} data packet cannot be correctly recovered.

In a possible implementation, the (k+1)^{th} data packet is a data packet obtained by CRC addition and channel encoding.

According to a third aspect, a secure communication method is provided. The method may be performed by a communication apparatus. The communication apparatus may be a terminal device or a network device, or may be a chip/chip system used in the terminal device or the network device. In the method, the communication apparatus receives a signal, and demodulates the signal, to obtain i second data packets. The communication apparatus inputs the i second data packets into a security module, to obtain i first data packets. The security module is configured to perform inverse security processing on the i second data packets.

In a possible implementation, the communication apparatus performs CRC check after performing channel decoding on the i second data packets. If the check succeeds, the i second data packets are input into the security module for security inverse processing.

In a possible implementation, the communication apparatus inputs the i second data packets into the security module after performing channel decoding, to obtain i third data packets. The communication apparatus performs CRC check on the i third data packets.

In a possible implementation, the communication apparatus inputs the i second data packets into the security module, to obtain i fourth data packets. The communication apparatus performs channel decoding on the i fourth data packets, and performs CRC check. When the CRC succeeds, the i first data packets are obtained.

In a possible implementation, the security module is configured to generate i random seeds, where the i^{th} random seed is used together with the i^{th} first data packet to generate the i^{th} second data packet. If i is an integer greater than or equal to 2, the i^{th} random seed is generated based on the (i-1)^{th} random seed and the (i-1)^{th} second data packet; or if i is equal to 1, the i^{th} random seed is generated based on a random vector.

According to a fourth aspect, a secure communication method is provided. The method may be performed by a communication apparatus. The communication apparatus may be a terminal device or a network device, or may be a chip/chip system used in the terminal device or the network device. In the method, the communication apparatus receives the (k+1)^{th} signal, and inputs the k^{th} data packet into a security module, to obtain the (k+1)^{th} piece of random information, where k is an integer greater than or equal to 1, and the k^{th} data packet is a data packet that is successfully transmitted. The communication apparatus obtains the (k+1)^{th} data packet based on the (k+1)^{th} piece of random information and the (k+1)^{th} signal.

In a possible implementation, the communication apparatus obtains, based on the (k+1)^{th} signal and a signal obtained by modulating the (k+1)^{th} piece of random information, a signal obtained by modulating the (k+1)^{th} data packet. The communication apparatus demodulates the signal obtained by modulating the (k+1)^{th} data packet, to obtain the (k+1)^{th} data packet.

In a possible implementation, the communication apparatus generates a scrambling parameter based on the (k+1)^{th} piece of random information. The communication apparatus controls a demodulation scheme of the (k+1)^{th} signal based on the scrambling parameter, to obtain the (k+1)^{th} data packet.

In a possible implementation, the communication apparatus generates a permutation index based on the (k+1)^{th} piece of random information, and the permutation index corresponds to at least one permutation manner. The communication apparatus performs an inverse operation of the at least one permutation manner on the demodulated (k+1)^{th} signal, to obtain the (k+1)^{th} data packet.

In a possible implementation, the communication apparatus performs channel decoding and CRC removal on the (k+1)^{th} data packet.

According to a fifth aspect, a communication apparatus is provided, including a processing unit and a transceiver unit.

The processing unit is configured to input i first data packets into a security module, to obtain i second data packets, where i is an integer greater than or equal to 1, and the security module is configured to perform security processing on the i first data packets. The processing unit is further configured to obtain a signal after modulating the i second data packets. The transceiver unit is configured to send the signal.

In a possible implementation, the processing unit is further configured to: add cyclic redundancy check (cyclic redundancy check, CRC) to each of the i second data packets, and perform channel encoding.

In a possible implementation, the processing unit is further configured to add a CRC to each of the i first data packets, to obtain i third data packets. The processing unit is further configured to input the i third data packets into the security module, to obtain the i second data packets.

In a possible implementation, the processing unit is further configured to: obtain, after adding a CRC to each of the i first data packets and performing channel encoding, i fourth data packets. The processing unit is further configured to input the i fourth data packets into the security module, to obtain the i second data packets.

In a possible implementation, the security module is configured to generate i random seeds, where the i^{th} random seed is used together with the i^{th} first data packet to generate the i^{th} second data packet. If i is an integer greater than or equal to 2, the i^{th} random seed is generated based on the (i-1)^{th} random seed and the (i-1)^{th} second data packet; or if i is equal to 1, the i^{th} random seed is generated based on a random vector.

According to a sixth aspect, a communication apparatus is provided, including a processing unit and a transceiver unit.

The processing unit is configured to input the k^{th} data packet into a security module, to obtain the (k+1)^{th} piece of random information, where k is an integer greater than or equal to 1, and the k^{th} data packet is a data packet that is successfully transmitted. The processing unit is further configured to obtain the (k+1)^{th} signal based on the (k+1)^{th} piece of random information and the (k+1)^{th} data packet. The transceiver unit is configured to send the (k+1)^{th} signal.

In a possible implementation, the processing unit is further configured to: separately modulate the (k+1)^{th} piece of random information and the (k+1)^{th} data packet, and process signals obtained by modulation, to obtain the (k+1)^{th} signal.

In a possible implementation, the processing unit is further configured to generate a scrambling parameter based on the (k+1)^{th} piece of random information. The processing unit is further configured to control a modulation scheme of the (k+1)^{th} data packet based on the scrambling parameter, to obtain the (k+1)^{th} signal.

In a possible implementation, the processing unit is further configured to generate a permutation index based on the (k+1)^{th} piece of random information, where the permutation index corresponds to at least one permutation manner. The processing unit is further configured to permute, based on the at least one permutation manner corresponding to the permutation index, bits included in the (k+1)^{th} data packet. The processing unit is further configured to modulate a permutated (k+1)^{th} data packet, to obtain the (k+1)^{th} signal.

In a possible implementation, the processing unit is further configured to: the (k+1)^{th} data packet is a data packet obtained by CRC addition and channel encoding.

According to a seventh aspect, a communication apparatus is provided, including a processing unit and a transceiver unit.

The transceiver unit is configured to receive a signal. The processing unit is configured to demodulate the signal, to obtain i second data packets. The processing unit is further configured to input the i second data packets into the security module, to obtain i first data packets. The security module is configured to perform inverse security processing on the i second data packets.

In a possible implementation, the processing unit is further configured to perform CRC check after performing channel decoding on the i second data packets. If the check succeeds, the processing unit is further configured to input the decoded i second data packets into the security module for inverse security processing.

In a possible implementation, the processing unit is further configured to: perform channel decoding on the i second data packets and input the i second data packets into the security module, to obtain i third data packets. The processing unit is further configured to perform CRC check on the i third data packets.

In a possible implementation, the processing unit is further configured to input the i second data packets into the security module, to obtain i fourth data packets. The processing unit is further configured to: perform channel decoding on the i fourth data packets, and perform CRC check. When the CRC succeeds, the i first data packets are obtained.

In a possible implementation, the security module is configured to generate i random seeds, where the i^{th} random seed is used together with the i^{th} first data packet to generate the i^{th} second data packet. If i is an integer greater than or equal to 2, the i^{th} random seed is generated based on the (i-1)^{th} random seed and the (i-1)^{th} second data packet; or if i is equal to 1, the i^{th} random seed is generated based on a random vector.

According to an eighth aspect, a communication apparatus is provided, including a processing unit and a transceiver unit.

The transceiver unit is configured to receive the (k+1)^{th} signal. The processing unit is configured to input the k^{th} data packet into a security module, to obtain the (k+1)^{th} piece of random information, where k is an integer greater than or equal to 1, and the k^{th} data packet is a data packet that is successfully transmitted. The processing unit is further configured to obtain the (k+1)^{th} data packet based on the (k+1)^{th} piece of random information and the (k+1)^{th} signal.

In a possible implementation, the processing unit is further configured to obtain, based on the (k+1)^{th} signal and a signal obtained by modulating the (k+1)^{th} piece of random information, a signal obtained by modulating the (k+1)^{th} data packet. The processing unit is further configured to demodulate a signal obtained by modulating the (k+1)^{th} data packet, to obtain the (k+1)^{th} data packet.

In a possible implementation, the processing unit is further configured to generate a scrambling parameter based on the (k+1)^{th} piece of random information. The processing unit is further configured to control a demodulation scheme of the (k+1)^{th} signal based on the scrambling parameter, to obtain the (k+1)^{th} data packet.

In a possible implementation, the processing unit is further configured to generate a permutation index based on the (k+1)^{th} piece of random information, where the permutation index corresponds to at least one permutation manner. The processing unit is further configured to perform an inverse operation of the at least one permutation manner on the demodulated (k+1)^{th} signal, to obtain the (k+1)^{th} data packet.

In a possible implementation, the processing unit is further configured to perform channel decoding and CRC removal on the (k+1)^{th} data packet.

According to a ninth aspect, a communication apparatus is provided. The communication apparatus may be the communication apparatus according to any one of the possible implementations of the fourth aspect to the eighth aspect in the foregoing embodiments, or a chip disposed in the communication apparatus according to any one of the fourth aspect to the eighth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the communication apparatus in any one of the possible implementations of the first aspect to the fourth aspect.

It should be understood that the communication interface may be implemented by using an antenna, a feeder, a codec, and the like in the communication apparatus. Alternatively, if the communication apparatus is a chip disposed in the communication apparatus, the communication interface may be an input/output interface of the chip, for example, an input/output pin. The communication apparatus may further include a transceiver, used by the communication apparatus to communicate with another device.

According to a tenth aspect, an embodiment of this application provides a chip system. The chip system includes a processor, and may further include a memory, configured to implement the method performed by the communication apparatus in any one of the possible implementations of the first aspect to the fourth aspect. In a possible implementation, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program or instructions. When the computer program or the instructions are run, the method performed by the communication apparatus in the foregoing aspects is implemented.

According to a twelfth aspect, a computer program product is provided. The computer program product includes computer program code or instructions. When the computer program code or instructions are run, the method performed by the communication apparatus in the foregoing aspects is performed.

According to a thirteenth aspect, a communication apparatus is provided. The communication apparatus includes units or modules configured to perform the methods in the foregoing aspects.

According to a fourteenth aspect, a chip system is provided, and includes a logic circuit and an input/output interface. The logic circuit is configured to perform the method performed by the communication apparatus. The input/output interface is configured to communicate with another apparatus.

According to a fifteenth aspect, a system is provided, including at least one communication apparatus that performs any possible implementation of the first aspect and at least one communication apparatus that performs any possible implementation of the third aspect.

According to a sixteenth aspect, a system is provided, including at least one communication apparatus that performs any possible implementation of the second aspect and at least one communication apparatus that performs any possible implementation of the fourth aspect.

For beneficial effects of the third aspect to the sixteenth aspect and the implementations thereof, refer to descriptions of the beneficial effects of the method in the first aspect and the second aspect and the implementations thereof.

### BRIEF DESCRIPTION OF DRAWINGS

FIG. 1 is a diagram of a communication system according to an embodiment of this application;
FIG. 2 is a diagram of a keyless secure transmission architecture;
FIG. 3 is a diagram of a security module;
FIG. 4 is an example flowchart of a secure communication method according to an embodiment of this application;
FIG. 5 is a block diagram of a secure communication method according to an embodiment of this application;
FIG. 6 is a block diagram of another secure communication method according to an embodiment of this application;
FIG. 7 is a block diagram of another secure communication method according to an embodiment of this application;
FIG. 8 is a diagram of a security module according to an embodiment of this application;
FIG. 9 is an example flowchart of another secure communication method according to an embodiment of this application;
FIG. 10 is a block diagram of another secure communication method according to an embodiment of this application;
FIG. 11 is a block diagram of another secure communication method according to an embodiment of this application;
FIG. 12 is a block diagram of another secure communication method according to an embodiment of this application;
FIG. 13 is a diagram of a communication apparatus according to an embodiment of this application;
FIG. 14 is a diagram of another communication apparatus according to an embodiment of this application;
FIG. 15 is a diagram of another communication apparatus according to an embodiment of this application; and
FIG. 16 is a diagram of another communication apparatus according to an embodiment of this application.

### DESCRIPTION OF EMBODIMENTS

For ease of understanding the technical solutions in embodiments of this application, technical terms provided in embodiments of this application are described.
(1) Random seed, also be referred to as random entropy or state information, or the like, with no restriction on naming in this application, is information used for security processing on a transport block, for example, used to encrypt the transport block or used to perform integrity protection on the transport block. Optionally, the random seed may be directly used for security processing on the transport block, or can be used to derive a key from the random seed according to some algorithms such as a hash algorithm for security processing on the transport block.
   Optionally, the random seed may be used as an input and an output of a security module. A random seed output by the security module may be a function of a random seed input by the security module and a message input by the security module. The function has many implementations, for example, an output random seed is Seedₒᵤₜ = HASH(Seedᵢₙ, Mₒᵤₜ), that is, Seedᵢ = HASH(Seedᵢ₋₁, EXT(Mᵢ₋₁, Seedᵢ₋₁)). Hash represents a hash operation, EXT represents a randomness extraction operation, Seedᵢₙ represents the random seed input by the security module, and Mₒᵤₜ represents the message input by the security module. EXT(Mᵢ₋₁, Seedᵢ₋₁) represents a randomness extraction operation on the i - 1^{th} random seed and the i - 1^{th} message.
(2) Data packet, also understood as a message packet, is a packet of to-be-transmitted information, for example, a source message packet or an encoded code block packet.

The following describes in detail embodiments of this application with reference to the accompanying drawings of the specification.

The technical solutions in embodiments of this application may be applied to a new radio (New Radio, NR) system, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, and the like. This is not limited herein.

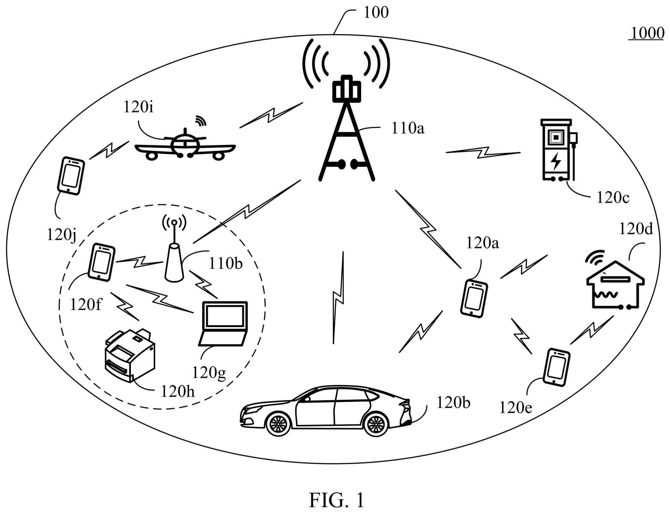

FIG. 1 is a diagram of an architecture of a communication system 1000 to which embodiments of this application are applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to an access network device in a wireless manner, and the access network device is connected to a core network device in a wireless or wired manner. The terminal apparatuses may be connected to each other in a wired or wireless manner, and the network devices may be connected to each other in a wired or wireless manner. FIG. 1 is merely a diagram. The communication system may further include another network device, for example, may further include a wireless relay device and a wireless backhaul device, which are not shown in FIG. 1.

The network device is a network side device with a wireless transceiver function. The network device, referred to as a RAN device, may be an apparatus that is in a radio access network (radio access network, RAN) and that provides a wireless communication function for the terminal device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU) or a distributed unit (distributed unit, DU). The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete some or all of functions of a physical layer. For specific descriptions of the foregoing protocol layers, refer to technical specifications related to a 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

In another possible scenario, a plurality of RAN nodes coordinate to assist the terminal in implementing radio access, and different RAN nodes respectively implement parts of functions of a base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand a meaning of the name. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device is a user side device with a wireless transceiver function. The terminal device may also be referred to as user equipment (user equipment, UE), a mobile station, a mobile terminal, or the like. The terminal apparatus may be widely used in various scenarios such as device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, smart office, a smart wearable device, smart transportation, and a smart city. The terminal apparatus may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific apparatus form that are used by the terminal apparatus are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a wireless air interface protocol. Certainly, 110a and 120i may alternatively communicate with each other according to an interface protocol between network devices. In this case, relative to 110a, 120i is also a network device. Therefore, the network device and the terminal device may be collectively referred to as communication apparatuses. 110a and 110b in FIG. 1 may be referred to as communication apparatuses with a function of a network device, and 120a to 120j in FIG. 1 may be referred to as communication apparatuses with a function of a terminal device.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

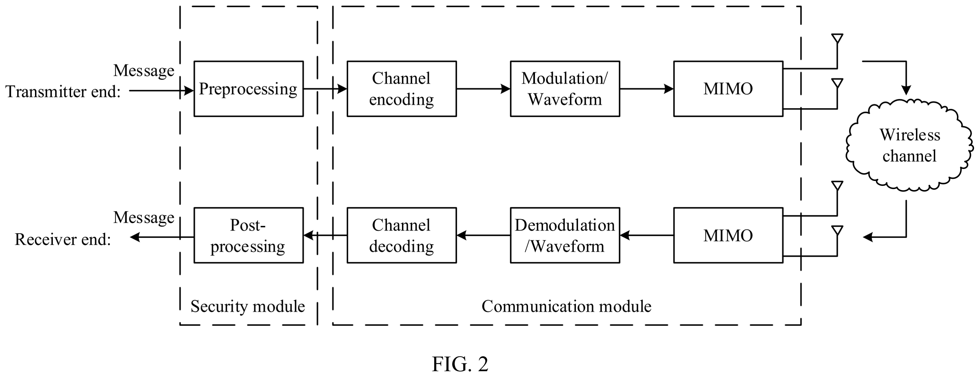

FIG. 2 shows a keyless secure transmission architecture, including a communication module and a security module. The communication module implements information transmission and provides a basic security capability by using a physical layer security transmission technology, such as secure coding, secure waveform modulation, or artificial noise. The security module is constructed by using cryptographic primitives, to achieve provable security strength.

The keyless secure transmission architecture shown in FIG. 2 integrates a cryptographic method and the physical layer security technology, and aims to implement a keyless endogenous security mechanism. In this architecture, the physical layer security technology is first used to create a very high bit error floor, for example, higher than 0.1, at a non-target receiver. That is, random entropy is introduced on a non-target channel. On this basis, a pre-processing module is introduced into a legitimate transmitter. The module may be a randomness extractor, and can extract and spread random entropy introduced by the physical layer security technology on the non-target channel, to obtain an equivalent key that is approximately evenly distributed, so that each bit in a message packet achieves provable security strength.

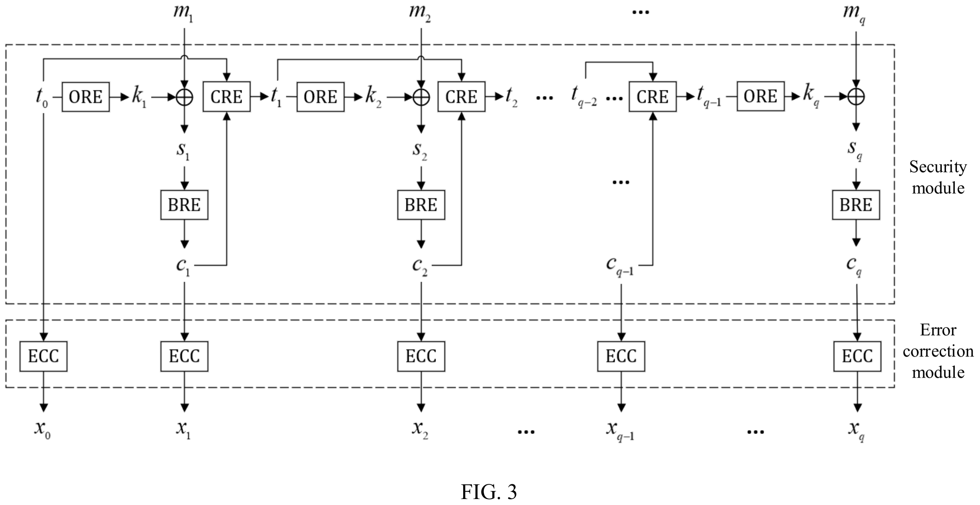

In the keyless secure transmission architecture, a core module is the security module, which corresponds to the preprocessing part in FIG. 2. An implementation structure is shown in FIG. 3. In FIG. 3, m₁, m₂, ..., and m_{q} represent to-be-transmitted source message packets, and x₁, x₂, ..., and x_{q} represent encoded packets output by a channel encoder. An error correction coding (error control coding, ECC) module may be a channel encoding module in FIG. 2. Channel encoding may use various encoding schemes widely used in a communication system, for example, low-density parity-check (low density parity check code, LDPC) encoding or polar (polar) encoding. It may be understood that the ECC module is not a component of the security module, and the ECC module is presented in FIG. 2 for integrity of structural completeness.

A randomness extraction operation is implemented by a security module shown in FIG. 3, and t₀ is an initial random seed and may be a random vector. A working principle of the security module is as follows: In a packet, a bidirectional entropy extractor (bidirectional randomness extractor, BRE) extracts and spreads random entropy introduced on a non-target channel, to protect all bits in the packet. That is, a random bit error introduced by the physical layer security technology is spread in the packet. Between a plurality of packets, channel noise entropy of preceding packets is accumulated by a compressive randomness extractor (compressive randomness extractor, CRE) and a one-way randomness extractor (one-way randomness extractor, ORE), to avoid a problem that some packets fail to achieve required security strength due to insufficient random entropy introduced by channels. In other words, even if a channel condition of a non-target channel in a specific packet is good, and therefore sufficient random entropy cannot be introduced in the current packet by using a physical layer security technology, channel noise entropy in a preceding packet can still be collected through the CRE and the ORE, and random bit errors introduced by the channel noise entropy are aggregated and spread to the current packet.

However, how the security module processes an input and an output of each module in the current standard protocol and how to use the security module for secure communication become technical problems that need to be resolved.

In view of this, embodiments of this application provide a secure communication method. In the method, the communication apparatus may input i first data packets into a security module, to obtain i second data packets, where i is an integer greater than or equal to 1. The security module is configured to perform security processing on the i first data packets. The communication apparatus may obtain a signal after modulating the i second data packets, and send the signal. Based on this solution, the communication apparatus may modulate the i second data packets output by the security module, implement secure communication by using the security module, and spread random entropy to each data packet by using the security module, so that each bit in the data packet achieves provable security strength.

In embodiments of this application, a communication apparatus at a transmitter end may be a terminal device or a network device, and a communication apparatus at a receiver end may be a terminal device or a network device. For example, when the communication apparatus at the transmitter end is a terminal device, the communication apparatus at the receiver end may be a network device or a terminal device. For another example, when the communication apparatus at the transmitter end is a network device, the communication apparatus at the receiver end may be a terminal device or a network device. For ease of description, in this application, the technical solutions in embodiments of this application are described in detail by using an example in which a network device is used as the communication apparatus at the transmitter end and a terminal device is used as the communication apparatus at the receiver end. Optionally, the secure communication method provided in embodiments of this application may be implemented by an RU in an O-RAN scenario.

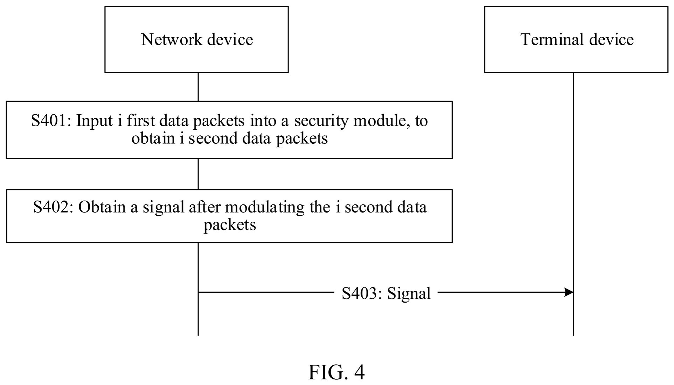

FIG. 4 is an example flowchart of a secure communication method according to an embodiment of this application. The method may include the following operations.

S401: A network device inputs i first data packets into a security module, to obtain i second data packets.

The security module may be configured to perform security processing, for example, randomness extraction processing, on the i first data packets. For example, the security module may generate i random seeds. The i^{th} random seed may be used together with the i^{th} first data packet to generate the i^{th} second data packet. If i is an integer greater than or equal to 2, the i^{th} random seed is generated based on the (i-1)^{th} second data packet or the (i-1)^{th} first data packet and the (i-1)^{th} random seed. If i is equal to 1, the i^{th} random seed is generated based on a random vector.

FIG. 3 is used as an example. If i is equal to 1, the 1^{st} random seed, that is, t₀, may be generated based on a random vector. The network device may input the 1^{st} random seed t₀ and the 1^{st} second data packet m₁ into the security module. In this case, the security module may process m₁ based on t₀, and output the 2^{nd} random seed t₁ and the 1^{st} first data packet c₁. The 2^{nd} random seed t₁ may be obtained based on the 1^{st} first data packet c₁ and the 1^{st} random seed t₀ shown in FIG. 3, or may be obtained based on the 1^{st} second data packet m₁ and the 1^{st} random seed t₀. This is not specifically limited in this application.

It may be understood that a random seed may be directly used to perform security processing on a first data packet in a manner such as bitwise XOR, or as shown in FIG. 3, a key may be derived from the random seed for security processing on a first data packet in a manner such as bitwise XOR or encryption. This is not specifically limited in this application.

S402: The network device obtains a signal after modulating the i second data packets.

S403: The network device sends the signal.

Correspondingly, a terminal device receives the signal.

After receiving the signal, the terminal device may demodulate the received signal, and perform an inverse operation of an operation of the network device on the i second data packets obtained by demodulating the signal.

For example, the terminal device may perform inverse security processing, for example, inverse random extraction processing, on the i^{th} second data packet. The terminal device may process the i^{th} second data packet based on the i^{th} random seed, to obtain the i^{th} first data packet and the (i+1)^{th} random seed. Similarly, if i is an integer greater than or equal to 2, the i^{th} random seed may be generated based on the (i-1)^{th} random seed and the (i-1)^{th} second data packet or the (i-1)^{th} first data packet. If i is equal to 1, the i^{th} random seed may be generated based on a random vector.

For example, the terminal device may input the i^{th} second packet into an inverse security module. FIG. 3 is used as an example. If i is equal to 1, the 1^{st} random seed, that is, t₀, may be generated based on a random vector. The terminal device may input the 1^{st} random seed t₀ and the 1^{st} first data packet c₁ into the security module. In this case, the security module may process c₁ based on t₀, and output the 2^{nd} random seed t₁ and the 1^{st} first data packet m₁.

In a possible implementation, an input of the security module in S401 may be a source bit, or may be an output of another module in a physical layer communication technology. The following describes three cases.

### Case 1:

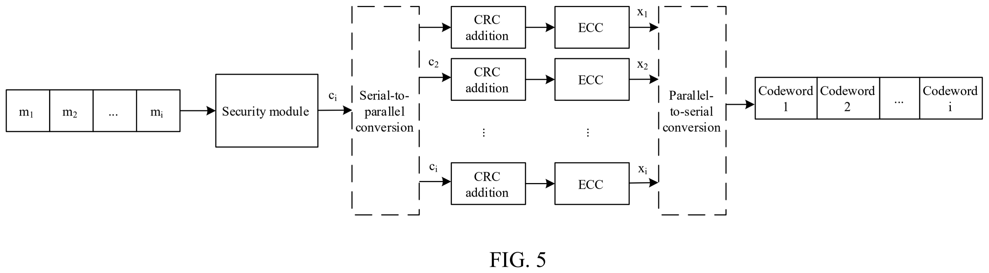

Refer to FIG. 5. In this case, the network device may input packets m₁, m₂, ..., and mᵢ of source bits, that is, the i first data packets, into the security module. The security module may perform security processing on the packets m₁, m₂, ..., and mᵢ. The network device performs serial-to-parallel conversion on packets c₁, c₂, ..., and cᵢ, that is, the i second data packets output by the security module. The network device may perform operations such as channel encoding on each packet: c₁, c₂, ..., and cᵢ. It may be understood that c₁, c₂, ..., and cᵢ for which channel encoding is to be performed may be packets obtained by cyclic redundancy check (cyclic redundancy check, CRC) addition. For example, the network device may add a CRC to each packet, that is, c₁, c₂, ..., and cᵢ, and then perform an operation such as channel encoding. The network device performs parallel-to-serial conversion on each channel encoded packet, to obtain to-be-transmitted codewords x₁, x₂, ..., and xᵢ. Each codeword is subsequently processed by symbol mapping, orthogonal frequency division multiplexing (orthogonal frequency division multiplexing, OFDM) modulation, and multiple-input multiple-output (multiple-input multiple-output, MIMO) precoding, and finally sent through an antenna.

It may be understood that serial-to-parallel conversion and parallel-to-serial conversion shown in FIG. 5 do not modify bits in each of the data packets. For example, serial-to-parallel conversion is to convert packets connected in series into packets connected in parallel. c₁, c₂, ..., and cᵢ are still c₁, c₂, ..., and cᵢ after serial-to-parallel conversion.

It should be noted that serial-to-parallel conversion and parallel-to-serial conversion shown in FIG. 5 are optional operations. In other words, the output of the security module may not undergo serial-to-parallel conversion. The network device may directly add a CRC to the output of the security module, that is, each of the i second data packets, and perform channel encoding. In this case, no parallel-to-serial conversion operation is required. Serial-to-parallel conversion can improve efficiency of CRC addition and channel encoding, which is not described in the following. If i=1, serial-to-parallel conversion or parallel-to-serial conversion is not required.

Based on the foregoing solution, for a non-target receiver, after completing channel decoding, the non-target receiver needs to input a codeword packet obtained by decoding to an inverse processing phase of the security module. According to a working principle of the security module, once any packet is decoded incorrectly, a random bit error is spread by the security module, so that errors occur when the non-target receiver recovers all packets. This implements secure communication. In addition, for a legitimate receiver, CRC check is performed after channel decoding is completed on each transmission codeword. If the check succeeds, it is considered that decoding succeeds, and the terminal device may input the i second data packets obtained by decoding into an inverse processing module of the security module, to obtain the i first data packets. Optionally, the terminal device may send an acknowledgment response (acknowledgement, ACK) to the network device. In this way, both a transmitter end and a receiver end can synchronously update a random seed for use in security processing and security inverse processing on a next codeword.

Optionally, if the check fails, it is considered that decoding fails, and error spreading can be avoided by using a feedback control mechanism. For example, the terminal device may send a negative acknowledgment (non-acknowledgment, NACK) to the network device. Neither the network device nor the terminal device updates a random seed, to keep synchronization of the random seed. The network device may retransmit, to the terminal device, a data packet that fails to be checked, until the legitimate receiver correctly decodes the data packet. This ensures that performance of legitimate communication is not affected. The non-target receiver is a passive attacker, and cannot use the feedback control mechanism to implement error-free decoding. Therefore, the foregoing error spreading effect occurs.

### Case 2:

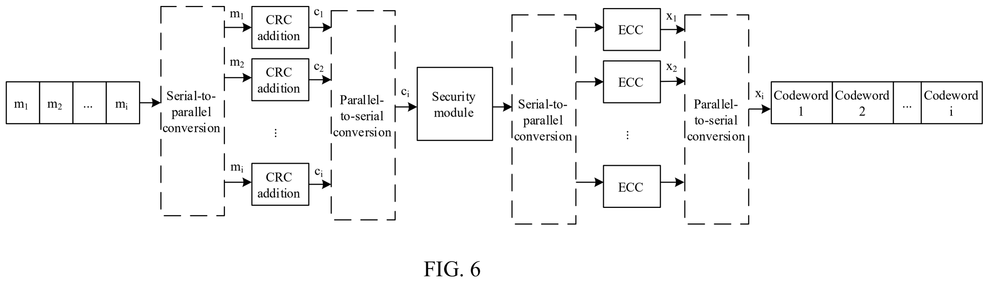

Refer to FIG. 6. In this case, the network device may perform serial-to-parallel conversion on packets m₁, m₂, ..., and mᵢ of source bits, that is, the i first data packets. i third data packets, that is, c₁, c₂, ..., and cᵢ, may be obtained by adding a CRC to each of the i first data packets m₁, m₂, ..., and mᵢ. For example, the network device may add a CRC to each packet of m₁, m₂, ..., and mᵢ, to obtain the i third data packets: c₁, c₂, ..., and cᵢ. The network device may perform parallel-to-serial conversion on the i third data packets c₁, c₂, ..., and cᵢ, and then input the i third data packets into the security module. The security module may perform security processing on the packets c₁, c₂, ..., and cᵢ. The network device performs serial-to-parallel conversion on the i second data packets output by the security module, and then performs channel encoding one by one on the i second data packets, to obtain to-be-transmitted codewords x₁, x₂, ..., and xᵢ. The network device performs parallel-to-serial conversion on the to-be-transmitted codewords x₁, x₂, ..., and xᵢ. Each codeword is subsequently processed by symbol mapping, OFDM modulation, MIMO precoding, and the like, and is finally sent through an antenna.

Based on the foregoing solution, after completing channel decoding, a non-target receiver needs to input a codeword packet obtained by decoding to an inverse processing phase of the security module. In case 2, a processing sequence of the network device is: CRC addition → randomness extraction → channel encoding. Therefore, inverse operations are completed at a receiver end: channel decoding → inverse processing of randomness extraction → CRC check. This means that, after completing channel decoding, the non-target receiver cannot determine whether each packet is correctly decoded, but directly inputs a decoding result to the inverse processing phase of the security module. According to the working principle of the security module, once any packet is decoded incorrectly, a random bit error is spread by the security module, so that errors occur when the non-target receiver recovers all packets. This implements secure communication.

In addition, for the legitimate receiver, after channel decoding and security inverse processing are performed on each codeword, CRC check is performed. If the check succeeds, the i first data packets are obtained, and an ACK is fed back at the same time, so that the transmitter end and the receiver end synchronously update a random seed for use in security processing and inverse security processing on a next codeword.

If the check fails, a NACK is fed back, and a random seed is not updated, so that a decoding error of the current packet does not affect recovery of a subsequent packet, and performance of legitimate communication is not affected. The non-target receiver is a passive attacker, and cannot send ACK/NACK messages to a legitimate transmitter and cannot synchronize a status of an extractor with the transmitter end. Therefore, the foregoing error spreading effect occurs.

### Case 3:

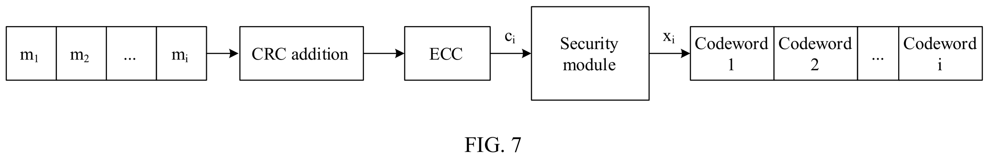

Refer to FIG. 7. In this case, after performing channel encoding on packets m₁, m₂, ..., and mᵢ of source bits, that is, the i first data packets, the network device may obtain i fourth data packets, that is, c₁, c₂, ..., and cᵢ. It may be understood that m₁, m₂, ..., and mᵢ for which channel encoding is to be performed may be packets obtained by cyclic redundancy check (cyclic redundancy check, CRC) addition. For example, the network device may obtain the i fourth data packets after adding a CRC to each packet, that is, m₁, m₂, ..., and mᵢ, and then performing an operation such as channel encoding. The network device may input the i fourth data packets into the security module. The security module may perform security processing on the packets m₁, m₂, ..., and mᵢ. The network device may input the i fourth data packets c₁, c₂, ..., and cᵢ into the security module. The security module may perform security processing on the packets c₁, c₂, ..., and cᵢ. The network device performs processing such as symbol mapping, OFDM modulation, and MIMO precoding on the i second data packets x₁, x₂, ..., and xᵢ that are output by the security module, and finally sends the i second data packets through an antenna.

Based on the foregoing solution, at the non-target receiver, it can be learned according to the working principle of the security module that once an error occurs in any packet in a bit sequence obtained by demodulation, a random bit error is spread by the security module, so that a quantity of error bits exceeds an error correction capability of an error correction code and error correction cannot be performed. In this way, errors occur when the non-target receiver recovers all message packets. This implements secure communication.

In addition, a legitimate receiver inputs the bit sequence obtained by demodulation into an inverse security module, and then performs channel decoding and CRC. If the check succeeds, the i first data packets are obtained, and an ACK is fed back at the same time, so that the transmitter end and the receiver end synchronously update a random seed for use in security processing and inverse security processing on a next codeword. If the check fails, a NACK is fed back, and a random seed is not updated, so that a decoding error of the current packet does not affect recovery of a subsequent packet, and performance of legitimate communication is not affected. The non-target receiver is a passive attacker, and cannot send ACK/NACK messages to a legitimate transmitter and cannot synchronize a status of an extractor with the transmitter end. Therefore, the foregoing error spreading effect occurs.

The security module in FIG. 5 to FIG. 7 may be implemented by using the structure shown in FIG. 3. In addition, a physical layer security technology may be used in a phase such as channel encoding, symbol mapping, OFDM modulation, and MIMO precoding. For example, artificial noise is introduced into a MIMO precoding module, so that the non-target receiver experiences a high bit error floor.

In embodiments of this application, FIG. 5 to FIG. 7 describe cases in which the security module is used in a data transmission scenario. An embodiment of this application further provides another secure communication method. In the method, a communication apparatus may input, into the security module, a data packet that is successfully transmitted, to obtain the (k+1)^{th} piece of random information, where k is an integer greater than or equal to 1. The communication apparatus may obtain the (k+1)^{th} signal based on the (k+1)^{th} piece of random information and the (k+1)^{th} data packet, and sends the (k+1)^{th} signal. Based on this solution, the communication apparatus may obtain the (k+1)^{th} signal based on the (k+1)^{th} piece of random information output by the security module and the (k+1)^{th} data packet, and implement secure communication by using the security module.

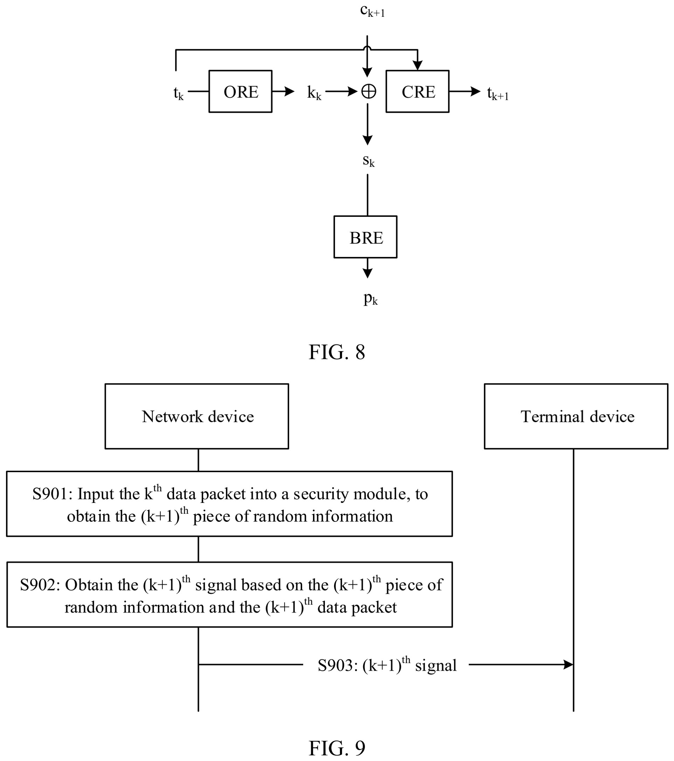

In a possible case, the security module in the foregoing solution may be implemented by using a structure shown in FIG. 8. When k is greater than or equal to 1, an input of the security module is cₖ₋₁, and an output is pₖ, that is, the (k+1)^{th} piece of random information, where tₖ or Kₖ represents the k^{th} random seed. The k^{th} random seed may be used together with the k^{th} data packet to generate the (k+1)^{th} piece of random information. If k is an integer greater than or equal to 2, the k^{th} random seed is generated based on the (k-1)^{th} data packet and the (k-1)^{th} random seed. If k is equal to 1, the k^{th} random seed is generated based on a random vector.

FIG. 9 is an example flowchart of a secure communication method according to an embodiment of this application. The method may include the following operations.

S901: A network device inputs the k^{th} data packet into a security module, to obtain the (k+1)^{th} piece of random information.

For example, the network device may input the k^{th} data packet into the security module shown in FIG. 8. The k^{th} data packet cₖ₋₁ may be used together with the k^{th} random seed tₖ to generate the (k+1)^{th} piece of random information pₖ. The k^{th} random seed and the k^{th} data packet cₖ₋₁ may generate the (k+1)^{th} random seed, and the (k+1)^{th} random seed is used to generate the (k+2)^{th} piece of random information.

Alternatively, the terminal device may input the k^{th} data packet into the security module, to obtain the (k+1)^{th} piece of random information. For an implementation, refer to an implementation in which the network device obtains the (k+1)^{th} piece of random information. Details are not described herein again.

S902: The network device obtains the (k+1)^{th} signal based on the (k+1)^{th} piece of random information and the (k+1)^{th} data packet.

For example, the network device may process the (k+1)^{th} data packet based on the (k+1)^{th} piece of random information, to obtain the (k+1)^{th} signal.

S903: The network device sends the (k+1)^{th} signal.

Correspondingly, a terminal device receives the (k+1)^{th} signal.

After receiving the (k+1)^{th} signal, the terminal device may demodulate the received signal. The terminal device may obtain the (k+1)^{th} data packet based on the (k+1)^{th} piece of random information and the (k+1)^{th} signal. For example, the terminal device may perform an inverse operation of an operation of the network device on the (k+1)^{th} signal based on the (k+1)^{th} piece of random information, to obtain the (k+1)^{th} data packet.

In a possible implementation, when the network device obtains the (k+1)^{th} signal based on the (k+1)^{th} piece of random information and the (k+1)^{th} data packet in S902, the following three manners may be used.

### Manner 1

In this manner, the network device may separately modulate the (k+1)^{th} piece of random information and the (k+1)^{th} data packet. The network device may process signals obtained by modulation, to obtain the (k+1)^{th} signal.

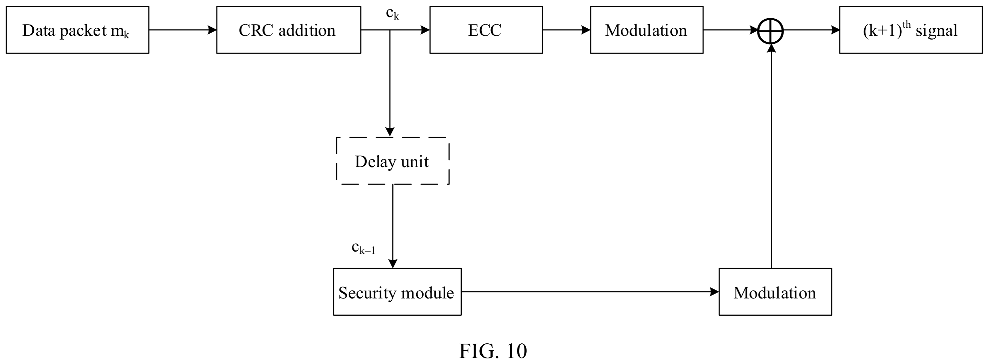

For example, refer to FIG. 10. The network device may add a CRC to the (k+1)^{th} data packet mₖ, to obtain cₖ. After performing channel encoding on cₖ, the network device may perform modulation, to obtain a first modulated signal. The network device may input the k^{th} data packet mₖ₋₁ into the security module, or the network device may add a CRC to the k^{th} data packet mₖ₋₁ and then input the k^{th} data packet obtained by CRC addition into the security module. The network device may modulate the (k+1)^{th} piece of random information output by the security module, to obtain a second modulated signal. The network device may obtain the (k+1)^{th} signal based on the first modulated signal and the second modulated signal. For example, the network device may multiply the first modulated signal and the second modulated signal symbol by symbol, which is equivalent to complex-domain scrambling, to generate the (k+1)^{th} signal.

Optionally, the network device may store, in a delay unit, the (k+1)^{th} data packet mₖ or the (k+1)^{th} data packet cₖ obtained by CRC addition. The delay unit may be configured to store a sent data packet. The foregoing k^{th} data packet mₖ₋₁ or the k^{th} data packet cₖ₋₁ obtained by CRC addition may also be obtained from the delay unit. This is not described again in the following.

For the 1^{st} data packet, the network device may add a CRC to the 1^{st} data packet, perform channel encoding, and then perform modulation, to obtain the 1^{st} signal. Optionally, the network device may encrypt the 1^{st} data packet by using the 1^{st} random seed, to improve transmission security. Details are not described subsequently.

For example, the network device adds a CRC to a data packet m₀, to obtain c₀. After performing channel encoding on c₀, the network device performs modulation, to obtain a modulated signal 0. Optionally, the network device may encrypt c₀ by using the first random seed t₀, and modulate the encrypted c₀, to obtain the modulated signal 0. The network device may send the modulated signal 0. After receiving the modulated signal 0, the terminal device may perform demodulation and channel decoding. The terminal device may perform CRC check on a channel decoding result. If the check succeeds, it is considered that decoding succeeds, and the terminal device may obtain the data packet m₀. Optionally, the terminal device may send an ACK to the network device, and update a random seed. If the check fails, it is considered that the terminal device fails to perform decoding, and the terminal device may feed back a NACK to the network device, so that the network device retransmits the data packet m₀ until the terminal device succeeds in decoding.

It should be noted that, in Manner 1, the k^{th} data packet is a data packet that is successfully transmitted, that is, a data packet recovered after the terminal device succeeds in decoding and performs inverse security processing. Optionally, the k^{th} data packet may be a successfully transmitted data packet that is closest to the (k+1)^{th} data packet.

For example, the terminal device successfully receives c₀ and obtains m₀. The network device may obtain c₁ after adding a CRC to a data packet m₁. After performing channel encoding on c₁, the network device may perform modulation, to obtain a modulated signal of m₁. The network device may obtain c₀ from the delay unit, and input c₀ into the security module shown in FIG. 8, to obtain the 1^{st} piece of random information p₁. The network device may modulate the 1^{st} piece of random information p₁, to obtain a modulated signal of p₁. The network device may multiply the modulated signal of m₁ and the modulated signal of p₁ symbol by symbol, to form the 1^{st} signal. The network device sends the 1^{st} signal, and the terminal device receives the 1^{st} signal. The terminal device may also obtain c₀ from the delay unit, and input c₀ into the security module shown in FIG. 8, to obtain the 1^{st} piece of random information p₁. The terminal device may also modulate the 1^{st} piece of random information pi, to obtain a modulated signal of p₁. The terminal device may obtain the modulated signal of m₁ based on the 1^{st} signal and the modulated signal of p₁. For example, the terminal device may perform complex-domain descrambling on the 1^{st} signal based on the modulated signal of p₁, to obtain the modulated signal of m₁. The terminal device may demodulate the modulated signal of m₁ and perform channel decoding.

The terminal device may perform CRC check on a channel decoding result. If the check succeeds, it is considered that the terminal device succeeds in decoding. The network device may transmit a next data packet m₂, and the network device may obtain the 2^{nd} signal based on the 2^{nd} piece of random information p₂ and the data packet m₂. The 2^{nd} piece of random information p₂ is obtained based on c₁ or m₁ and t₁.

Optionally, if the check fails, it is considered that the terminal device fails in decoding. In this case, the terminal device may send a NACK to the network device, so that the network device retransmits m₁. Optionally, if the terminal device still fails in decoding when a maximum quantity of retransmissions is reached, the network device may transmit the next data packet m₂ to the terminal device. In this case, random information used by the network device to perform security processing on the next data packet m₂ may still be p₁.

Based on the foregoing solution, for a legitimate receiver, because cₖ₋₁ is correctly received, the legitimate receiver learns of a symbol sequence used for performing complex-domain scrambling, and may perform normal demodulation after completing complex-domain descrambling. In addition, because a physical layer security technology is used, there is a very high bit error floor at a non-target receiver. In addition, due to independence of a non-target link and a legitimate link, a decoding error mode of the non-target receiver is not consistent with that of the legitimate receiver. Therefore, on the premise that the legitimate receiver correctly receives cᵢ₋₁, the non-target receiver does not necessarily receive cₖ₋₁ correctly. In this way, the non-target receiver cannot obtain a correct complex-domain scrambling symbol sequence, and therefore, demodulation and decoding errors are caused. That is, a decoding error of cₖ₋₁ causes a decoding error of cₖ. This causes error spreading effect. That is, an error in decoding any packet by the non-target receiver causes decoding errors in all subsequent packets, to significantly improve system security.

### Manner 2

In this manner, the network device may generate a scrambling parameter based on the (k+1)^{th} piece of random information. The scrambling parameter may control a modulation scheme of the (k+1)^{th} data packet, or the scrambling parameter may indicate or describe the modulation scheme of the (k+1)^{th} data packet. In other words, the scrambling parameter may correspond to the modulation scheme of the (k+1)^{th} data packet. The network device may determine the modulation scheme of the (k+1)^{th} data packet based on the scrambling parameter, and modulate the (k+1)^{th} data packet based on the modulation scheme, to obtain the (k+1)^{th} signal.

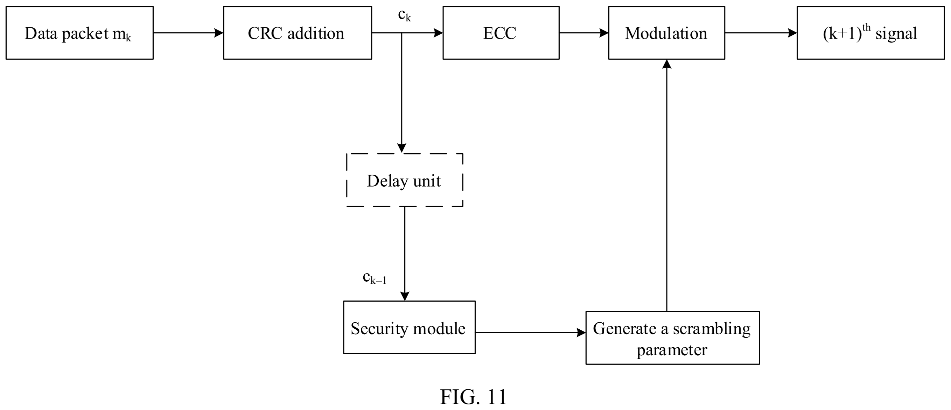

For example, refer to FIG. 11. The network device may input the k^{th} data packet mₖ₋₁ into the security module, or the network device may add a CRC to the k^{th} data packet mₖ₋₁ and then input the k^{th} data packet obtained by CRC addition into the security module. In this way, the network device can obtain a bit stream output by the security module, that is, the (k+1)^{th} piece of random information. The (k+1)^{th} piece of random information may be used to generate a scrambling parameter. For example, the network device may generate the scrambling parameter according to a hash algorithm, an interleaving algorithm, or the like. This is not specifically limited in this application.

The network device may add a CRC to the (k+1)^{th} data packet mₖ, to obtain cₖ. After performing channel encoding on cₖ, the network device may perform modulation. When modulating cₖ obtained by channel encoding, the network device may perform control by using the scrambling parameter. For example, the scrambling parameter may control a format of a modulation constellation diagram, for example, a rotation angle of a constellation point, or a mapping relationship between a bit and a constellation point.

Optionally, for the delay unit, the 1^{st} data packet, and the k^{th} data packet, refer to related descriptions in FIG. 10. Details are not described herein again.

The terminal device may also input the k^{th} data packet mₖ₋₁ into the security module, or add a CRC to the k^{th} data packet mₖ₋₁ and then input the k^{th} data packet obtained by CRC addition into the security module. In this way, the terminal device can obtain a bit stream output by the security module, that is, the (k+1)^{th} piece of random information. The (k+1)^{th} piece of random information may be used to generate a scrambling parameter. It may be understood that an algorithm for generating the scrambling parameter by the terminal device is the same as an algorithm for generating the scrambling parameter by the network device, and may be agreed upon in advance. This is not specifically limited in this application. In this way, when demodulating the (k+1)^{th} signal, the terminal device may perform control by using the scrambling parameter. The terminal device may perform channel decoding on a data packet obtained by demodulation, and perform CRC check on a decoding result. For implementation, refer to related descriptions in FIG. 10. Details are not described herein again.

Based on the foregoing solution, for the legitimate receiver, because the legitimate receiver has correctly received cₖ₋₁, the legitimate receiver learns of the scrambling parameter used to scramble a modulation process, so that the legitimate receiver can perform normal demodulation. In addition, because a physical layer security technology is used, there is a very high bit error floor at the non-target receiver. In addition, due to independence of a non-target link and a legitimate link, a decoding error mode of the non-target receiver is not consistent with that of the legitimate receiver. Therefore, on the premise that the legitimate receiver correctly receives cₖ₋₁, the non-target receiver does not necessarily receive cₖ₋₁ correctly. In this way, the non-target receiver cannot obtain a correct scrambling parameter, and therefore, demodulation and decoding errors are caused. That is, a decoding error of cₖ₋₁ causes a decoding error of cᵢ. This causes error spreading effect. That is, an error in decoding any packet by the non-target receiver causes decoding errors in all subsequent packets, to significantly improve system security.

### Manner 3

In this manner, the network device may generate a permutation index (permutation index) based on the (k+1)^{th} piece of random information. The permutation index corresponds to one or more permutation manners (permutation). The permutation manner may be understood as a manner of permutation of a bit sequence. For example, if the bit sequence includes three bits: abc, there are six possible permutation manners in total: abc, bac, bca, acb, cab and cba. The six permutation manners may be in one-to-one correspondence with permutation indexes, or one of the six permutation manners may correspond to one or more permutation indexes. It may be understood that a correspondence between a permutation manner and a permutation index may be agreed upon by the network device and the terminal device in advance. This is not specifically limited in this application. The network device may perform permutation on the (k+1)^{th} data packet based on the permutation index and then perform modulation, to obtain the (k+1)^{th} signal.

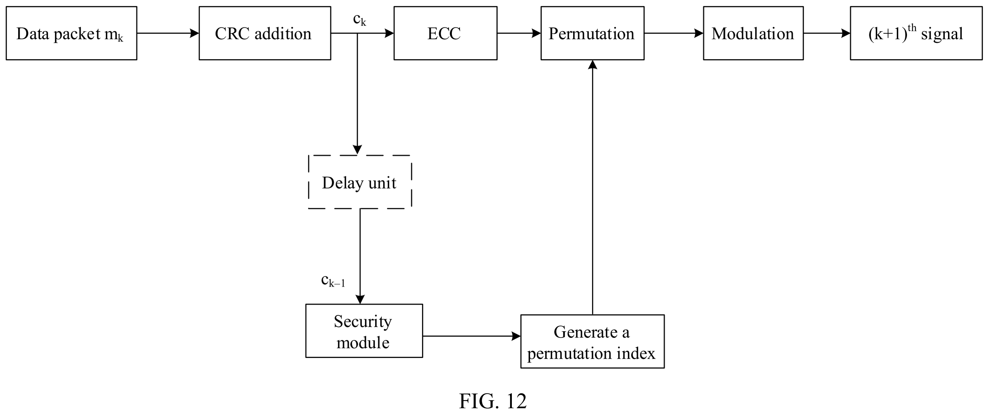

For example, refer to FIG. 12. The network device may input the k^{th} data packet mₖ₋₁ into the security module, or the network device may add a CRC to the k^{th} data packet mₖ₋₁ and then input the k^{th} data packet obtained by CRC addition into the security module. In this way, the network device can obtain a bit stream output by the security module, that is, the (k+1)^{th} piece of random information. The (k+1)^{th} piece of random information may be used to generate a permutation index. For example, the network device may generate the permutation index according to a hash algorithm, an interleaving algorithm, or the like. This is not specifically limited in this application.

The network device may add a CRC to the (k+1)^{th} data packet mₖ, to obtain cₖ. After performing channel encoding on cₖ, the network device may perform permutation based on a permutation manner corresponding to the permutation index. The network device may modulate cₖ obtained by permutation, to obtain the (k+1)^{th} signal.

Optionally, for the delay unit, the 1^{st} data packet, and the k^{th} data packet, refer to related descriptions in FIG. 10. Details are not described herein again.

The terminal device may also input the k^{th} data packet mₖ₋₁ into the security module, or add a CRC to the k^{th} data packet mₖ₋₁ and then input the k^{th} data packet obtained by CRC addition into the security module. In this way, the terminal device can obtain a bit stream output by the security module, that is, the (k+1)^{th} piece of random information. The (k+1)^{th} piece of random information may be used to generate a permutation index. It may be understood that an algorithm for generating the permutation index by the terminal device is the same as an algorithm for generating the permutation index by the network device, and may be agreed upon in advance. This is not specifically limited in this application. In this way, after demodulating the (k+1)^{th} signal, the terminal device may perform, based on a permutation manner corresponding to the permutation index, an inverse operation on a data packet obtained by demodulation, perform channel decoding, and perform CRC check on a decoding result. For implementation, refer to related descriptions in FIG. 10. Details are not described herein again.

Based on the foregoing solution, for the legitimate receiver, because the legitimate receiver has correctly received cₖ₋₁, the legitimate receiver learns of the permutation index. Therefore, after completing demodulation, the legitimate receiver may perform an inverse operation of the permutation manner of the transmitter end on a bit sequence output by a demodulator, and then perform normal channel decoding. In addition, because a physical layer security technology is used, there is a very high bit error floor at the non-target receiver. In addition, due to independence of a non-target link and a legitimate link, a decoding error mode of the non-target receiver is not consistent with that of the legitimate receiver. Therefore, on the premise that the legitimate receiver correctly receives cₖ₋₁, the non-target receiver does not necessarily receive cₖ₋₁ correctly. In this way, the non-target receiver cannot obtain a correct permutation index, and therefore cannot perform an inverse operation of a permutation manner of a transmitter end on the bit sequence output by the demodulator. In this way, after being decoded, cₖ cannot be correctly recovered. That is, a decoding error of cₖ₋₁ causes a decoding error of cₖ. This causes error spreading effect. That is, an error in decoding any packet by the non-target receiver causes decoding errors in all subsequent packets, to significantly improve system security.

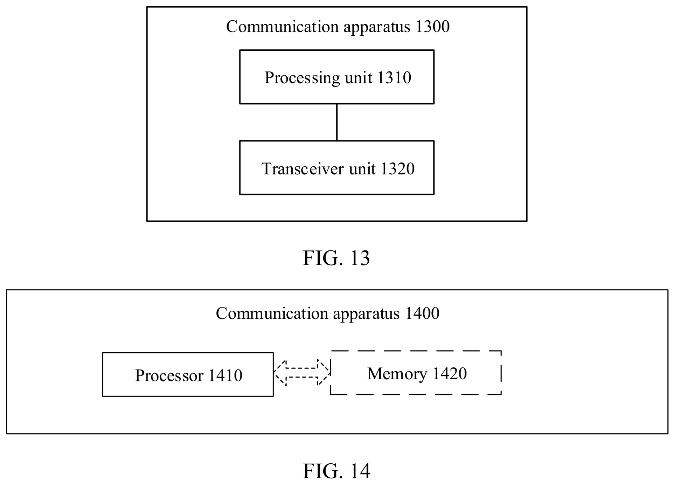

FIG. 13 is a block diagram of a communication apparatus 1300 according to an embodiment of this application. The communication apparatus 1300 may correspondingly implement functions or steps implemented by the terminal device or the network device in the foregoing method embodiments. The communication apparatus may include a processing unit 1310 and a transceiver unit 1320. Optionally, a storage unit may be further included. The storage unit may be configured to store instructions (code or a program) and/or data. The processing unit 1310 and the transceiver unit 1320 may be coupled to the storage unit. For example, the processing unit 1310 may read the instructions (the code or the program) and/or the data in the storage unit, to implement a corresponding method. The foregoing units may be independently disposed, or may be partially or completely integrated.

Optionally, the transceiver unit 1320 may include a sending unit and a receiving unit. The sending unit may be configured to perform all sending operations performed by the communication apparatus 1300, and the receiving unit may be configured to perform all receiving operations performed by the communication apparatus 1300.

In some possible implementations, the communication apparatus 1300 can correspondingly implement behavior and functions of the terminal device and the like in the foregoing method embodiments. For example, the communication apparatus 1300 may be a terminal device, or may be a component (for example, a chip or a circuit) used in the terminal device. The transceiver unit 1320 may be configured to perform all receiving or sending operations performed by the terminal device in the embodiment shown in FIG. 4 and/or FIG. 9, for example, S403 in the embodiment shown in FIG. 4, for another example, S903 in the embodiment shown in FIG. 9 and/or another process used to support the technology described in this specification. The processing unit 1310 is configured to perform all operations other than the receiving or sending operations performed by the terminal device in the embodiment shown in FIG. 4 and/or FIG. 9.

For example, the transceiver unit 1320 is configured to receive a signal. The processing unit 1310 is configured to demodulate the signal, to obtain i second data packets. The processing unit 1310 is further configured to input the i second data packets into a security module, to obtain i first data packets. The security module is configured to perform inverse security processing on the i second data packets.

For another example, the transceiver unit 1320 is configured to receive the (k+1)^{th} signal. The processing unit 1310 is configured to input the k^{th} data packet into a security module, to obtain the (k+1)^{th} piece of random information, where k is an integer greater than or equal to 1, and the k^{th} data packet is a data packet that is successfully transmitted. The processing unit 1310 is further configured to obtain the (k+1)^{th} data packet based on the (k+1)^{th} piece of random information and the (k+1)^{th} signal.

In some possible implementations, the communication apparatus 1300 can correspondingly implement behavior and functions of the network device in the foregoing method embodiments. For example, the communication apparatus 1300 may be a network device, or may be a component (for example, a chip or a circuit) used in the network device. The transceiver unit 1320 may be configured to perform all receiving or sending operations performed by the network device in the embodiment shown in FIG. 4 and/or FIG. 9, for example, S403 in the embodiment shown in FIG. 4, for another example, S903 in the embodiment shown in FIG. 9 and/or another process used to support the technology described in this specification. The processing unit 1310 is configured to perform all operations other than the receiving or sending operations performed by the network device in the embodiment shown in FIG. 4, for example, S401 and S402 in the embodiment shown in FIG. 4, for example, S901 and S902 in the embodiment shown in FIG. 9, and/or another process used to support the technology described in this specification.

For example, the processing unit 1310 is configured to input i first data packets into a security module, to obtain i second data packets, where i is an integer greater than or equal to 1, and the security module is configured to perform security processing on the i first data packets. The processing unit 1310 is further configured to obtain a signal after modulating the i second data packets. The transceiver unit 1320 is configured to send the signal.

For another example, the processing unit 1310 is configured to input the k^{th} data packet into a security module, to obtain the (k+1)^{th} piece of random information, where k is an integer greater than or equal to 1, and the k^{th} data packet is a data packet that is successfully transmitted. The processing unit 1310 is further configured to obtain the (k+1)^{th} signal based on the (k+1)^{th} piece of random information and the (k+1)^{th} data packet. The transceiver unit 1320 is configured to send the (k+1)^{th} signal.

For operations performed by the processing unit 1310 and the transceiver unit 1320, refer to the related descriptions in the foregoing method embodiments.

It should be understood that the processing unit 1310 in this embodiment of this application may be implemented by a processor or a processor-related circuit component, and the transceiver unit 1320 may be implemented by a transceiver, a transceiver-related circuit component, or a communication interface.

Based on a same concept, as shown in FIG. 14, an embodiment of this application provides a communication apparatus 1400. The communication apparatus 1400 includes a processor 1410. Optionally, the communication apparatus 1400 may further include a memory 1420, configured to store instructions executed by the processor 1410, store input data required by the processor 1410 to run the instructions, or store data generated after the processor 1410 runs the instructions. The processor 1410 may implement the method shown in the foregoing method embodiments based on the instructions stored in the memory 1420.

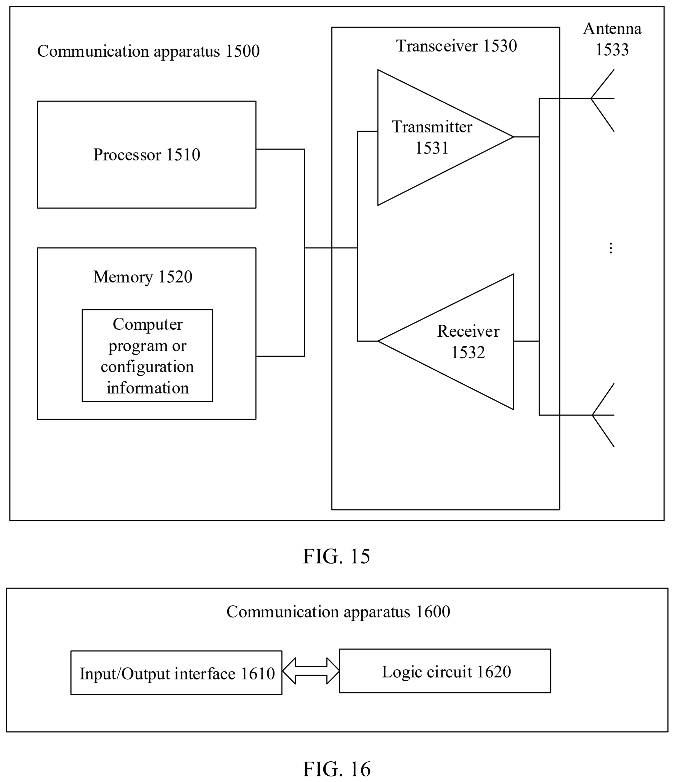

Based on the same concept, as shown in FIG. 15, an embodiment of this application provides a communication apparatus 1500. The communication apparatus 1500 may be a chip or a chip system. Optionally, in this embodiment of this application, the chip system may include a chip, or may include a chip and another discrete device.

The communication apparatus 1500 may include at least one processor 1510. The processor 1510 is coupled to a memory. Optionally, the memory may be located inside the apparatus, or may be located outside the apparatus. For example, the communication apparatus 1500 may further include at least one memory 1520. The memory 1520 stores a computer program, configuration information, a computer program or instructions, and/or data necessary for implementing any one of the foregoing embodiments. The processor 1510 may execute the computer program stored in the memory 1520, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1510 may cooperate with the memory 1520. A specific connection medium between a transceiver 1530, the processor 1510, and the memory 1520 is not limited in this embodiment of this application.

The communication apparatus 1500 may further include the transceiver 1530, and the communication apparatus 1500 may exchange information with another device through the transceiver 1530. The transceiver 1530 may be a circuit, a bus, a transceiver, or any other apparatus that may be configured to exchange information, or is referred to as a signal transceiver unit. As shown in FIG. 15, the transceiver 1530 includes a transmitter 1531, a receiver 1532, and an antenna 1533. In addition, when the communication apparatus 1500 is a chip-type apparatus or a circuit, the transceiver in the communication apparatus 1500 may alternatively be an input/output circuit and/or a communication interface, and may input data (or receive data) and output data (or send data). The processor is an integrated processor, a microprocessor, or an integrated circuit, and the processor may determine output data based on input data.

In a possible implementation, the communication apparatus 1500 may be used in a terminal device. Specifically, the communication apparatus 1500 may be a terminal device, or may be an apparatus that can support a terminal device in implementing functions of the terminal device in any one of the foregoing embodiments. The memory 1520 stores a necessary computer program, a computer program or instructions, and/or data for implementing functions of the communication apparatus in any one of the foregoing embodiments. The processor 1510 may execute the computer program stored in the memory 1520, to complete the method performed by the terminal device in any one of the foregoing embodiments.

In a possible implementation, the communication apparatus 1500 may be used in a network device. Specifically, the communication apparatus 1500 may be a network device, or may be an apparatus that can support a network device in implementing functions of the network device in any one of the foregoing embodiments. The memory 1520 stores a necessary computer program, a computer program or instructions, and/or data for implementing functions of the network device in any one of the foregoing embodiments. The processor 1510 may execute the computer program stored in the memory 1520, to complete the method performed by the network device in any one of the foregoing embodiments.

The communication apparatus 1500 provided in this embodiment may be used in the terminal device to implement the method performed by the terminal device, or may be used in the network device to implement the method performed by the network device. Therefore, for technical effects that can be achieved by the communication apparatus 1500, refer to the foregoing method embodiments. Details are not described herein again.

In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 16. Based on the foregoing embodiments, an embodiment of this application further provides another communication apparatus 1600, including an input/output interface 1610 and a logic circuit 1620. The input/output interface 1610 is configured to receive code instructions and transmit the code instructions to the logic circuit 1620. The logic circuit 1620 is configured to run the code instructions to perform the method performed by the network device or the terminal device in any one of the foregoing embodiments.

Optionally, the input/output interface 1610 may be an interface on a chip, and the logic circuit 1620 may be one or more processors. Optionally, the one or more processors may be located in the apparatus, or may be located outside the apparatus.

The following describes in detail an operation performed by the communication apparatus used in the terminal device or the network device.

In an optional implementation, the communication apparatus 1600 may be used in the terminal device, to perform the method performed by the terminal device, specifically, for example, the method performed by the terminal device in the embodiment shown in FIG. 4 and/or FIG. 9.

For example, the input/output interface 1610 is configured to input a signal. The logic circuit 1620 is configured to demodulate the signal, to obtain i second data packets. The logic circuit 1620 is further configured to input the i second data packets into a security module, to obtain i first data packets. The security module is configured to perform inverse security processing on the i second data packets.

For another example, the input/output interface 1610 is configured to input the (k+1)^{th} signal. The logic circuit 1620 is configured to input the k^{th} data packet into a security module, to obtain the (k+1)^{th} piece of random information, where k is an integer greater than or equal to 1, and the k^{th} data packet is a data packet that is successfully transmitted. The logic circuit 1620 is further configured to obtain the (k+1)^{th} data packet based on the (k+1)^{th} piece of random information and the (k+1)^{th} signal.

The communication apparatus 1600 provided in this embodiment may be used in the terminal device to complete the method performed by the terminal device. Therefore, for technical effects that can be achieved by the communication apparatus 1500, refer to the foregoing method embodiments. Details are not described herein again.

In an optional implementation, the communication apparatus 1600 may be used in the network device to perform the method performed by the network device, specifically, for example, the method performed by the network device in the embodiment shown in FIG. 4 and/or FIG. 9.

For example, the logic circuit 1620 is configured to input i first data packets into a security module, to obtain i second data packets, where i is an integer greater than or equal to 1, and the security module is configured to perform security processing on the i first data packets. The logic circuit 1620 is further configured to obtain a signal after modulating the i second data packets. The input/output interface 1610 is configured to output the signal.

For another example, the logic circuit 1620 is configured to input the k^{th} data packet into a security module, to obtain the (k+1)^{th} piece of random information, where k is an integer greater than or equal to 1, and the k^{th} data packet is a data packet that is successfully transmitted. The logic circuit 1620 is further configured to obtain the (k+1)^{th} signal based on the (k+1)^{th} piece of random information and the (k+1)^{th} data packet. The input/output interface 1610 is configured to output the (k+1)^{th} signal.

The communication apparatus 1600 provided in this embodiment may be used in the network device to complete the method performed by the network device. Therefore, for technical effects that can be achieved by the communication apparatus 1500, refer to the foregoing method embodiments. Details are not described herein again.

Based on the foregoing embodiments, an embodiment of this application further provides a communication system. The communication system includes at least one communication apparatus used in a terminal device and at least one communication apparatus used in a network device. For technical effect that can be achieved, refer to the foregoing method embodiments. Details are not described herein again.

Based on the foregoing embodiments, an embodiment of this application further provides a system. The communication system includes at least one network device and a terminal device.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement the functions of the communication apparatuses in FIG. 13 to FIG. 16, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A secure communication method, comprising:
inputting i first data packets into a security module, to obtain i second data packets, wherein i is an integer greater than or equal to 1, and the security module is configured to perform security processing on the i first data packets;
obtaining a signal after modulating the i second data packets; and
sending the signal.

2. The method according to claim 1, further comprising:
adding a cyclic redundancy check CRC to each of the i second data packets, and performing channel encoding.

3. The method according to claim 1, wherein the inputting the i first data packets into the security module comprises:
adding a CRC to each of the i first data packets, to obtain i third data packets; and
inputting the i third data packets into the security module, to obtain the i second data packets.

4. The method according to claim 1, wherein the inputting the i first data packets into the security module comprises:
obtaining, after adding a CRC to each of the i first data packets and performing channel encoding, i fourth data packets; and
inputting the i fourth data packets into the security module, to obtain the i second data packets.

5. The method according to any one of claims 1 to 4, wherein the security module is configured to generate i random seeds, and the i^{th} random seed is used together with the i^{th} first data packet to generate the i^{th} second data packet; and if i is an integer greater than or equal to 2, the i^{th} random seed is generated based on the (i-1)^{th} random seed and the (i-1)^{th} second data packet; or if i is equal to 1, the i^{th} random seed is generated based on a random vector.

6. A secure communication method, comprising:
inputting the k^{th} data packet into a security module, to obtain the (k+1)^{th} piece of random information, wherein k is an integer greater than or equal to 1, and the k^{th} data packet is a data packet that is successfully transmitted;
obtaining the (k+1)^{th} signal based on the (k+1)^{th} piece of random information and the (k+1)^{th} data packet; and
sending the (k+1)^{th} signal.

7. The method according to claim 6, wherein the generating the (k+1)^{th} signal based on the (k+1)^{th} piece of random information and the (k+1)^{th} data packet comprises:
separately modulating the (k+1)^{th} piece of random information and the (k+1)^{th} data packet, and processing signals obtained by modulation, to obtain the (k+1)^{th} signal.

8. The method according to claim 6, wherein the generating the (k+1)^{th} signal based on the (k+1)^{th} piece of random information and the (k+1)^{th} data packet comprises:
generating a scrambling parameter based on the (k+1)^{th} piece of random information; and
controlling a modulation scheme of the (k+1)^{th} data packet based on the scrambling parameter, to obtain the (k+1)^{th} signal.

9. The method according to claim 6, wherein the generating the (k+1)^{th} signal based on the (k+1)^{th} piece of random information and the (k+1)^{th} data packet comprises:
generating a permutation index based on the (k+1)^{th} piece of random information, wherein the permutation index corresponds to at least one permutation manner;
permuting, based on the at least one permutation manner corresponding to the permutation index, bits comprised in the (k+1)^{th} data packet; and
modulating a permutated (k+1)^{th} data packet, to obtain the (k+1)^{th} signal.

10. The method according to any one of claims 6 to 9, wherein the (k+1)^{th} data packet is a data packet obtained by CRC addition and channel encoding.

11. A secure communication method at a physical layer, comprising:
receiving a signal; and
demodulating the signal, to obtain i second data packets; and
inputting the i second data packets into a security module, to obtain i first data packets, wherein the security module is configured to perform inverse security processing on the i second data packets.

12. The method according to claim 11, further comprising:
after performing channel decoding on the i second data packets, performing cyclic redundancy check CRC, and if the check succeeds, inputting i decoded second data packets into the security module for inverse security processing.

13. The method according to claim 11, wherein the inputting the i second data packets into the security module, to obtain the i first data packets comprises:
inputting the i second data packets into the security module after performing channel decoding, to obtain i third data packets; and
performing CRC check on the i third data packets.

14. The method according to claim 11, wherein the inputting the i second data packets into the security module, to obtain the i first data packets comprises:
inputting the i second data packets into the security module, to obtain i fourth data packets;
performing channel decoding on the i fourth data packets, and performing CRC check; and
obtaining the i first data packets when the CRC succeeds.

15. The method according to any one of claims 11 to 14, wherein the security module is configured to generate i random seeds, and the i^{th} random seed is used together with the i^{th} first data packet to generate the i^{th} second data packet; and if i is an integer greater than or equal to 2, the i^{th} random seed is generated based on the (i-1)^{th} random seed and the (i-1)^{th} second data packet; or if i is equal to 1, the i^{th} random seed is generated based on a random vector.

16. A secure communication method, comprising:
receiving the (k+1)^{th} signal;
inputting the k^{th} data packet into a security module, to obtain the (k+1)^{th} piece of random information, wherein k is an integer greater than or equal to 1, and the k^{th} data packet is a data packet that is successfully transmitted; and
obtaining the (k+1)^{th} data packet based on the (k+1)^{th} piece of random information and the (k+1)^{th} signal.

17. The method according to claim 16, wherein the obtaining the (k+1)^{th} data packet based on the (k+1)^{th} piece of random information and the (k+1)^{th} signal comprises:
obtaining, based on the (k+1)^{th} signal and a signal obtained by modulating the (k+1)^{th} piece of random information, a signal obtained by modulating the (k+1)^{th} data packet; and
demodulating the signal obtained by modulating the (k+1)^{th} data packet, to obtain the (k+1)^{th} data packet.

18. The method according to claim 16, wherein the obtaining the (k+1)^{th} data packet based on the (k+1)^{th} piece of random information and the (k+1)^{th} signal comprises:
generating a scrambling parameter based on the (k+1)^{th} piece of random information; and
controlling a demodulation scheme of the (k+1)^{th} signal based on the scrambling parameter, to obtain the (k+1)^{th} data packet.

19. The method according to claim 16, wherein the obtaining the (k+1)^{th} data packet based on the (k+1)^{th} piece of random information and the (k+1)^{th} signal comprises:
generating a permutation index based on the (k+1)^{th} piece of random information, wherein the permutation index corresponds to at least one permutation manner; and
performing an inverse operation of the at least one permutation manner on the demodulated (k+1)^{th} signal, to obtain the (k+1)^{th} data packet.

20. The method according to any one of claims 16 to 19, further comprising:
performing channel decoding and cyclic redundancy check CRC removal on the (k+1)^{th} data packet.

21. A communication apparatus, comprising a unit configured to perform the method according to any one of claims 1 to 5, or comprising a unit configured to perform the method according to any one of claims 6 to 10.

22. A communication apparatus, comprising a unit configured to perform the method according to any one of claims 11 to 15, or comprising a unit configured to perform the method according to any one of claims 16 to 20.

23. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 5, the electronic apparatus is enabled to perform the method according to any one of claims 6 to 10, the electronic apparatus is enabled to perform the method according to any one of claims 11 to 15, or the electronic apparatus is enabled to perform the method according to any one of claims 16 to 20.

24. A communication system, comprising an apparatus configured to perform the method according to any one of claims 1 to 5 and an apparatus configured to perform the method according to any one of claims 11 to 15, or comprising an apparatus configured to perform the method according to any one of claims 6 to 10 and an apparatus configured to perform the method according to any one of claims 16 to 20.

25. A chip system, wherein the chip system comprises:
a communication interface; and
a processor, configured to invoke and run the instructions through the communication interface, to enable a device on which the chip system is installed to perform the method according to any one of claims 1 to 5, enable a device on which the chip system is installed to perform the method according to any one of claims 6 to 10, enable a device on which the chip system is installed to perform the method according to any one of claims 11 to 15, or enable a device on which the chip system is installed to perform the method according to any one of claims 16 to 20.
